# EUROPEAN PATENT APPLICATION

(11) **EP 4 491 652 A1**
(43) Date of publication of application: **15.01.2025**
(21) Application number: 23185468.8
(22) Date of filing: 14.07.2023
(51) Int. Cl.: C08G 59/22, C08G 59/24, C08G 59/40, C08G 59/42

(54) **METHOD FOR CURING A CATIONICALLY POLYMERIZABLE EPOXY RESIN COMPOSITION**

(71) Applicant: Henkel AG & Co. KGaA, 40589 Düsseldorf (DE)
(72) Inventor: Horiguchi, Haruo, Tokyo, 140-0013 (JP); Kanno, Takayuki, Kamakura, 247-0055 (JP); Harada, Shigeo, Kanagawa, 235-0017 (JP); Kurniawan, Dodik, Nagoya-shi, 468-0055 (JP)

(57) **Abstract**

The present invention relates to a method for curing a cationically polymerizable epoxy resin composition, the method comprising: irradiating a cationically polymerizable epoxy resin composition with a UV, visible or infrared laser, and maintaining the temperature of the cationically polymerizable epoxy resin composition between 25°C higher than the curing reaction peak temperature of the cationically polymerizable epoxy resin composition as measured by differential scanning calorimetry and 275°C, wherein the cationically polymerizable epoxy resin composition comprises: (A) an epoxy resin; and (B) an acid generator.

## Description

### [Technical Field]

The present invention relates to a method for curing a cationically polymerizable epoxy resin composition.

### [Background Art]

Adhesive technology is increasingly being used to bond components of optical devices such as camera modules and LiDAR (light detection and ranging) modules. For example, US 2015/0124098 A discloses a dual-cure epoxy adhesive that can be cured by both light and heat to bond lens components of an automotive camera module, and the adhesive is temporarily cured by UV irradiation so that the optical axis of lens does not shift just after adjusting it, and then firmly hardened with heat. However, this technology requires a long-time curing process using heat, which poses a problem in terms of production efficiency. In addition, JP 2022-136720 A discloses to use a laser beam to cure a cationically polymerizable epoxy adhesive composition and the process can be completed in a short time. However, when the adhesive is irradiated with laser light, the temperature of the adhesive continues to rise rapidly, and the adhesive may decompose before sufficient curing strength is obtained.

### [Summary of Invention]

### [Technical Problem]

The present inventors found that conventional method for curing a cationically polymerizable epoxy resin composition have the following problems. Specifically, in these conventional methods, the curing process with UV irradiation needs long-term or in the process using laser beam, the adhesive is irradiated with laser, the temperature of the adhesive continues to rise rapidly, and the adhesive may decompose before sufficient curing strength is obtained.

An object of the present invention is to provide a method for curing a cationically polymerizable epoxy resin composition that firmly cures the adhesive composition in a short period of time without decomposing the adhesive.

### [Solution to Problem]

The present inventors conducted extensive research to achieve the above object, and found that the object can be achieved by a method comprising: irradiating a cationically polymerizable epoxy resin composition with a UV, visible or infrared laser, and maintaining the surface temperature of the cationically polymerizable epoxy resin composition between 25°C higher than the curing reaction peak temperature of the cationically polymerizable epoxy resin composition as measured by differential scanning calorimetry and 275°C, wherein the cationically polymerizable epoxy resin composition comprises: (A) an epoxy resin; and (B) an acid generator. The present invention has been accomplished by further conducting research based on this finding. The present invention includes the following embodiments.

### Item 1

A method for curing a cationically polymerizable epoxy resin composition, the method comprising:
1) irradiating the cationically polymerizable epoxy resin composition with a UV, visible or infrared laser, and
2) maintaining the surface temperature of the cationically polymerizable epoxy resin composition between 25°C higher than the curing reaction peak temperature of the cationically polymerizable epoxy resin composition as measured by differential scanning calorimetry and 275°C,
wherein the cationically polymerizable epoxy resin composition comprises:
(A) an epoxy resin; and
(B) an acid generator.

### Item 2

The method for curing a cationically polymerizable epoxy resin composition according to Item 1, wherein the epoxy resin (A) comprises an alicyclic epoxy resin.

### Item 3

The method for curing a cationically polymerizable epoxy resin composition according to Item 2, wherein the epoxy resin (A) further comprises a glycidyl ether epoxy resin.

### Item 4

The method for curing a cationically polymerizable epoxy resin composition according to any one of Items 1 to 3, wherein the surface temperature of the cationically polymerizable epoxy resin composition is maintained between 30°C higher than the curing reaction peak temperature of the cationically polymerizable epoxy resin composition as measured by differential scanning calorimetry and 250°C.

### Item 5

The method for curing a cationically polymerizable epoxy resin composition according to any one of Items 1 to 4, wherein the cationically polymerizable epoxy resin composition further comprises (C) an oxetane resin.

### Item 6

The method for curing a cationically polymerizable epoxy resin composition according to any one of Items 1 to 5, wherein the cationically polymerizable epoxy resin composition further comprises (D) an inorganic filler.

### Item 7

The method for curing a cationically polymerizable epoxy resin composition according to any one of Items 1 to 6, wherein the acid generator (B) is a photoacid generator or a thermal acid generator.

### Item 8

The method of curing a cationically polymerizable epoxy resin composition according to any one of items 1 to 7, wherein the cationically polymerizable epoxy resin composition is curable at a visible or infrared laser having a wavelength of 300 to 1200 nm.

### Item 9

The method for curing a cationically polymerizable epoxy resin composition according to any one of Items 1 to 8, wherein the laser irradiation is controlled so that the time from the start of laser irradiation to reaching the surface temperature of the cationically polymerizable epoxy resin composition is from 0.1 to 30 seconds.

### Item 10

The method for curing a cationically polymerizable epoxy resin composition according to any one of Items 1 to 9, wherein the laser irradiation is controlled so that the time from the start of laser irradiation to reaching the surface temperature of the cationically polymerizable epoxy resin composition is from 1 to 25 seconds

### Item 11

The method for curing a cationically polymerizable epoxy resin composition according to any one of Items 1 to 10, for use in at least one application selected from the group consisting of metal bonding, camera module assembly, and electronic sensor assembly.

### [Advantageous Effects of Invention]

The method for curing a cationically polymerizable epoxy resin composition of the present invention enables curing the epoxy adhesive composition in a shorter time without decomposing the cured epoxy adhesive.

### [Description of Embodiments]

The method for curing a cationically polymerizable epoxy resin composition of the present invention comprises at least two steps: 1) irradiating a cationically polymerizable epoxy resin composition comprising (A) an epoxy resin and (B) an acid generator with a UV, visible or infrared laser, and 2) maintaining the surface temperature of the cationically polymerizable epoxy resin composition between 25°C higher than the curing reaction peak temperature of the cationically polymerizable epoxy resin composition as measured by differential scanning calorimetry and 275°C

In one embodiment, the curing method further comprises a step of applying the cationically polymerizable epoxy resin composition onto a first substrate and/or a second substrate.

The first substrate and/or second substrate can be a single material and a single layer or can include multiple layers of the same or different material. The layers can be continuous or discontinuous.

The substrates described herein can have a variety of properties including rigidity (e.g., rigid substrates i.e., the substrate cannot be bent by an individual using two hands or will break if an attempt is made to bend the substrate with two hands), flexibility (e.g., flexible substrates i.e., the substrate can be bent using no greater than the force of two hands), porosity, conductivity, lack of conductivity, and combinations thereof.

The substrates of the article can be in a variety of forms including, e.g., fibers, threads, yarns, wovens, nonwovens, films (e.g., polymer film, metallized polymer film, continuous films, discontinuous films, and combinations thereof), foils (e.g., metal foil), sheets (e.g., metal sheet, polymer sheet, continuous sheets, discontinuous sheets, and combinations thereof), and combinations thereof.

In preferred embodiments, at least one of the substrates can be selected from metals, such as metal firing pastes, aluminum, tin, molybdenum, silver, conductive metal oxides such as indium tin oxide (ITO), fluorine doped tin oxide, aluminum doped zinc oxide etc, glasses such as inked glass, bare glass, resins such as polycarbonate, polybutylece terephthalate, polyethylene terephthalate and polyamide. Further suitable metals include copper, gold, palladium, platinum, aluminum, indium, silver coated copper, silver coated aluminum, tin, and tin coated copper. Preferably both substrates are selected from one of the aforementioned materials. More preferably, both substrates are glass.

The cationically polymerizable epoxy resin composition can be applied to the first and/or second substrates by using any suitable application method including, e.g., automatic fine line dispensing, jet dispensing, slot die coating, roll coating, gravure coating, transfer coating, pattern coating, screen printing, spray coating, filament coating, by extrusion, air knife, trailing blade, brushing, dipping, doctor blade, offset gravure coating, rotogravure coating, and combinations thereof. The cationically polymerizable epoxy resin composition can be applied as a continuous or discontinuous coating, in a single or multiple layers and combinations thereof.

In the present invention, the UV, visible or infrared laser to irradiate the cationically polymerizable epoxy resin composition specifically refers to those having a wavelength of 300 to 1200 nm. The cationically polymerizable epoxy resin composition of the present invention can be used for curing with a laser having a wavelength of preferably 350 to 1100 nm, and more preferably 400 to 1100 nm.

The generation of the laser in such wavelength range is known in the art. Preferably, the laser is provided by a laser diode device. Examples of commercial product of such device include CB series products, such as CB1F, CB3, CB5, CB20 from Panasonic Corporation.

In the second step, the surface temperature of the cationically polymerizable epoxy resin composition is maintained at a temperature between 25°C higher than the curing reaction peak temperature of the cationically polymerizable epoxy resin composition as measured by differential scanning calorimetry and 275°C.

Preferably, the surface temperature of the cationically polymerizable epoxy resin composition is maintained in a temperature between between 30°C higher than the curing reaction peak temperature of the cationically polymerizable epoxy resin composition as measured by differential scanning calorimetry and 250°C. If the temperature is too high, the cured adhesive may have poorer appearance due to burning as the decomposition temperature of the cured product of such cationically polymerizable epoxy resin composition is about 275°C. If the temperature is too low, the adhesive composition may not completely cure, and sufficient adhesion performance may not be achieved. Good appearance and sufficient adhesion performance of cured adhesive are obtained by stabilizing the surface temperature to the preset temperature within a short period of time by the laser output control.

The curing reaction peak temperature of the cationically polymerizable epoxy resin composition can be measured using a differential scanning calorimeter, e.g. DSC 6000 from Seiko Instruments Inc., in a nitrogen atmosphere at a temperature range of 25°C to 200°C and a heating rate of 10°C /min.

The laser irradiation is controlled so that the time from the start of laser irradiation to reaching the surface temperature of the cationically polymerizable epoxy resin composition is from 0.5 to 30 seconds, and preferably from 1 to 25 seconds, and more preferably from 1 to 20 seconds. Preferably, the total irradiation time is from 1 to 60 seconds, and preferably from 2 to 30 seconds, and the maintaining time refers to the difference of the total irradiation time and time to reach to the surface temperature is from 0.5 to 30 seconds, and preferably from 1 to 20 seconds. If the irradiation and maintaining time is controlled in such ranges, the appearance and/or curability of the cured adhesive may be improved.

The surface temperature of the cationically polymerizable epoxy resin composition can be measured by method known in the art. Preferably, the measurement is contactless to the surface of the cationically polymerizable epoxy resin composition. The means for contactless measurement of the surface temperature of the adhesives is not particularly limited, but for example, a configuration combining a temperature sensor for detecting radiant infrared rays emitted from the adhesive composition and an arithmetic unit for calculating the temperature of the adhesive composition. Although the output control means is not particularly limited, for example, by connecting the arithmetic unit and the laser in a controllable manner, the output of the laser can be adjusted according to the arithmetic result of the arithmetic unit. With this configuration, by detecting the surface temperature of the adhesive composition, if the temperature exceeds a preset temperature, a command signal can be sent to the laser to control the output so that it becomes appropriate. Preferably, the laser diode device to generate the UV, visible or infrared laser include a radiation thermometer having such configuration to control the working temperature.

The epoxy resin composition in the curing method is cationically polymerizable and comprises (A) an epoxy resin; and (B) an acid generator.

The epoxy resin for use in the present invention is not particularly limited as long as the epoxy resin can undergo cationic polymerization. The reaction mechanism of cationic polymerization of epoxy resins is well known. Specifically, the epoxy resin for use in the present invention can be any polymerization system whose growing chain is a carbon cation (carbocation). The epoxy resin for use in the present invention forms a carbocation by reacting with an acid generated by an acid generator. Growth reaction occurs between this carbocation and the epoxy resin for use in the present invention, thereby ultimately providing a cured product.

The epoxy resin for use in the present invention may be a single epoxy resin or a combination of two or more epoxy resins, if necessary.

In terms of excellent curability, the epoxy resin for use in the present invention preferably contains an alicyclic epoxy resin. The alicyclic epoxy resin refers to an epoxy resin that has an alicyclic ring in its molecule, with part of the carbon-carbon bonds that form the alicyclic ring being shared with an epoxy ring. The alicyclic epoxy resin for use can be a known alicyclic epoxy resin.

When the epoxy resin for use in the present invention contains an alicyclic epoxy resin, the epoxy resin contains the alicyclic epoxy resin in an amount of preferably 3 wt.% or more, more preferably 5 wt.% or more, and still more preferably 10 wt.% or more based on the entire epoxy resin in terms of curability.

The alicyclic epoxy resin for use in the present invention has an epoxy equivalent of, for example, 100 to 500, preferably 100 to 400, and more preferably 100 to 300.

Examples of the alicyclic epoxy resin for use in the present invention include, but not particularly limited to, (3',4'-epoxycyclohexane)methyl 3,4-epoxycyclohexylcarboxylate (Celloxide 2021P (CEL2021P) produced by Daicel Corporation), 3,4-epoxycyclohexylmethyl-3',4'-epoxycyclohexanecarboxylate modified ε-caprolactone (Celloxide 2081 (CEL2081) produced by Daicel Corporation), 1 ,2-epoxy-4-vinylcyclohexane (Celloxide 2000 (CEL2000) produced by Daicel Corporation), (Celloxide 8010 (CEL8010) produced by Daicel Corporation), (KR-470 produced by Shin-Etsu Chemical Co., Ltd.), and the like.

In terms of imparting flexibility to a cured product, the epoxy resin for use in the present invention preferably contains at least one epoxy resin selected from the group consisting of a glycidyl ether epoxy resin and a glycidyl ester epoxy resin. Compared to alicyclic epoxy resins, these epoxy resins undergo a slower growth reaction, so the curing reaction persists after laser irradiation, and the molecular weight grows into only about a few thousands. Thus, these epoxy resins can impart preferable flexibility to the final cured product.

The glycidyl ether epoxy resin and glycidyl ester epoxy resin for use in the present invention each have an epoxy equivalent of, for example, 100 to 1000, preferably 100 to 800, and more preferably 100 to 600.

The glycidyl ether epoxy resin and glycidyl ester epoxy resin for use in the present invention are preferably liquid or semi-solid at room temperature (about 23°C), but can be dissolved and used if they are solid.

The glycidyl ether epoxy resin and glycidyl ester epoxy resin are preferably those with an aromatic structure in the main chain. The glycidyl ether epoxy resin and glycidyl ester epoxy resin may have a polycyclic aromatic structure (naphthalene, anthracene, etc.) in the main chain.

The epoxy resin to be added for imparting flexibility to a cured product is preferably a glycidyl ether epoxy resin. Examples of glycidyl ether epoxy resins include bisphenol-type glycidyl ethers, and the like.

Bisphenol-type glycidyl ethers include bisphenol A glycidyl ether, bisphenol F glycidyl ether, bisphenol AP glycidyl ether, bisphenol B glycidyl ether, bisphenol C glycidyl ether, bisphenol E glycidyl ether, bisphenol G glycidyl ether, and the like.

Preferable bisphenol A glycidyl ether includes (EPICLON 840 produced by DIC Corporation), (EPICLON 840S produced by DIC Corporation), (EPICLON 850 produced by DIC Corporation), (EPICLON 850S produced by DIC Corporation), (EXA-850CRP produced by DIC Corporation), (EXA-850LC produced by DIC Corporation), (EXA-860 produced by DIC Corporation), (EXA-1050 produced by DIC Corporation), (EXA-1055 produced by DIC Corporation), (825 produced by Mitsubishi Chemical Corporation), (827 produced by Mitsubishi Chemical Corporation), (828 produced by Mitsubishi Chemical Corporation), (1001 produced by Mitsubishi Chemical Corporation), (1002 produced by Mitsubishi Chemical Corporation), (RE-310S produced by Nippon Kayaku Co., Ltd.), and the like.

Preferable bisphenol F glycidyl ether includes (EXA-830 produced by DIC Corporation), (EXA-830S produced by DIC Corporation), (EXA-835 produced by DIC Corporation), (EXA-830CRP produced by DIC Corporation), (EXA830LVP produced by DIC Corporation), (EXA835LV produced by DIC Corporation), (806 produced by Mitsubishi Chemical Corporation), (806H produced by Mitsubishi Chemical Corporation), (807 produced by Mitsubishi Chemical Corporation), and (RE-303SL produced by Nippon Kayaku Co., Ltd.); and phenol aralkyl epoxy includes (NC3000L produced by Nippon Kayaku Co., Ltd.), (NC2000L produced by Nippon Kayaku Co., Ltd.), and the like.

If the epoxy resin for use in the present invention contains a glycidyl ether epoxy resin and/or a glycidyl ester epoxy resin, the epoxy resin contains the glycidyl ether epoxy resin and the glycidyl ester epoxy resin in a total amount of preferably 3 wt.% or more, more preferably 5 wt.% or more, and still more preferably 10 wt.% or more based on the entire epoxy resin in terms of imparting flexibility to a cured product.

The acid generator for use in the present invention is not particularly limited as long as it generates an acid directly or indirectly by using a visible or infrared laser, and as long as the acid reacts with the epoxy resin (A) to produce a carbocation.

Examples of the acid generator that generates an acid directly or indirectly by using a visible or infrared laser mentioned above include photoacid generators and the like. A photoacid generator is a compound that generates an acid by being irradiated with light. The photoacid generator has a moiety that absorbs light and a moiety that serves as the source of an acid in the molecule. Examples include, but are not particularly limited to, onium salts with cationic and anionic moieties, and the like. In these onium salts, the cationic moiety corresponds to the moiety that absorbs light, while the anionic moiety serves as the source of an acid.

As the cationic moiety, the onium salts mentioned above may contain a sulfonium ion, an iodonium ion, a phosphonium ion, a quaternary ammonium ion, a diazonium ion, or the like. The sulfonium ion for use may be, for example, a triarylsulfonium ion.

As the anionic moiety, the onium salts may contain PF₆-, SbF₆-, BF₄-, or the like.

Examples of the photoacid generator include CPI-100P, CPI-101A, CPI-200K, CPI-210S, CPI-310B, CPI-310FG, CPI-410S, and IK-1, all of which are produced by San-Apro Ltd.; IRGACURE 250 and IRGACURE 270, both of which are produced by Ciba Specialty Chemicals Inc.; BLUESIL PI 2074, produced by Elkem; and the like.

Examples of the acid generator that generates an acid directly or indirectly by using a visible or infrared laser mentioned above include thermal acid generators and the like. A thermal acid generator is a compound that generates an acid by absorbing heat. The heat generated by a visible or infrared laser can allow the thermal acid generator to generate an acid. If necessary, for example, an inorganic filler or the like may be appropriately incorporated in the cationically polymerizable epoxy resin composition of the present invention, whereby heat can be more easily generated by visible or infrared laser irradiation, and an acid can be more easily generated from the thermal acid generator.

Examples of the thermal acid generator include (TGA CXC1612 and TGA CXC1821, both of which produced by King Industries, Inc.), (San-aid SI-B2A, produced by Sanshin Chemical Industry Co., Ltd.), (San-aid SI-B7, produced by Sanshin Chemical Industry Co., Ltd.), (San-aid SI-B3A, produced by Sanshin Chemical Industry Co., Ltd.), (San-aid SI-B3, produced by Sanshin Chemical Industry Co., Ltd.), (San-aid SI-B5, produced by Sanshin Chemical Industry Co., Ltd.), and the like.

The acid generator for use in the present invention may be a single acid generator or a combination of two or more acid generators, if necessary.

The cationically polymerizable epoxy resin composition of the present invention comprises the acid generator in an amount of, for example, 0.01 to 10 wt.%, preferably 0.1 to 8 wt.%, more preferably 0.1 to 5 wt.%, and still more preferably 0.1 to 3 wt.% based on the entire cationically polymerizable epoxy resin composition.

The cationically polymerizable epoxy resin composition of the present invention preferably contains an oxetane resin.

The oxetane resin is not particularly limited as long as a resin having an oxetane ring in the molecule. Preferably, the oxetane compound has a 3-oxetanyl group and, if necessary, may also have another functional group. The oxetane compound has at least one oxetane ring in the molecule, but preferably has two or more oxetane rings. The oxetane equivalent of the polyfunctional monomer having two or more oxetane groups is not particularly limited, but is preferably 400 or less, and more preferably 300 or less, and is preferably 100 or more.

The oxetane compound is not particularly limited, and examples thereof include bis[1-ethyl(3-oxetanyl)]methyl ether [(3-ethyl-3{[(3-ethyloxetane-3-yl)methoxy]methyl}oxetane)] represented by the following formula (a1-1), a xylylene bis oxetane represented by the following formula (a1-2), 4,4'-bis[3-ethyl-(3-oxetanyl)methoxymethyl]biphenyl, 3-ethyl-3-[(2-ethylhexyloxy) methyl] oxetane, 3-ethyl-3-hydroxymethyloxetane, 3-ethyl-3-(4-hydroxybutyl)oxymethyloxetane, 1,4-bis(3-ethyl-3-oxetanylmethoxy)methylbenzene, (3-ethyloxetane-3-yl)methyl methacrylate, (bis[(3-ethyl-3-oxetanyl)methyl] isophthalate), and the like.

The oxetane compounds may be used singly or in combinations of two or more thereof.

In one aspect of the present embodiment, it is preferable to comprise 3-ethyl-3{[(3-ethyloxetane-3-yl)methoxy]methyl}oxetane represented by the following formula (a1-1) as the component (a1). The amount of the compound represented by formula (a1-1) is preferably 80% by mass or more, and may be 100% by mass, based on the total amount of the component (a1).

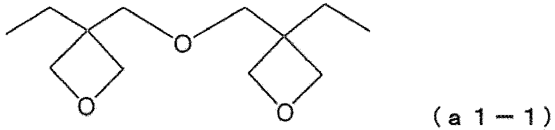

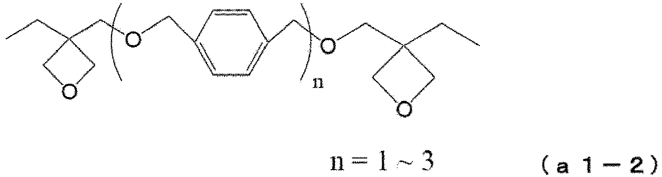

Examples of commercially available products of the compound represented by formula (a1-1) include OXT-221 (trade name, manufactured by Toagosei Co., Ltd.). In addition, examples of commercially available products of the oxetane compound include OXT-212, OXT-101, and OXT-121 manufactured by Toagosei Co., Ltd., and EHO, OXMA, OXBP, HBOX, and OXIPA manufactured by Ube Industries, Ltd.

The cationically polymerizable epoxy resin composition of the present invention may further comprise an inorganic filler.

The inorganic filler used in the present invention may be a single inorganic filler or a combination of two or more inorganic fillers, if necessary.

Examples of the inorganic filler used in the present invention include silica fillers such as colloidal silica, hydrophobic silica, fine silica, and nano-silica, as well as acrylic beads, glass beads, urethane beads, bentonite, acetylene black, Ketjen black, and the like.

The inorganic filler used in the present invention can be one having a volume average particle size (if the filler is not granular, its maximum weight average diameter) of, for example, 0.01 to 50 µm, preferably 0.1 to 40 µm, and more preferably 1 to 30 µm. In the present specification, the volume average particle size of the inorganic filler is specifically measured by a dynamic light scattering nanotrac particle size analyzer.

Examples of commercial products of inorganic fillers include high-purity synthetic spherical silica (SO-E5, average particle size: 2 µm; SO-E2, average particle size: 0.6 µm, both produced by Admatechs), silica (FB7SDX produced by Tatsumori Ltd., average particle size: 10 µm), silica (TS-10-034P produced by Micron, average particle size: 20 µm), and the like.

The cationically polymerizable epoxy resin composition of the present invention comprises an inorganic filler in an amount of, for example, 40 to 80 wt.%, and preferably 50 to 70 wt.%, based on the entire cationically polymerizable epoxy resin composition.

The cationically polymerizable epoxy resin composition of the present invention may further comprise one or more other components, if necessary.

Specific examples of other components include oxetane resins. Particularly in terms of imparting flexibility to a cured product, when a glycidyl ether epoxy resin or a glycidyl ester epoxy resin is contained, the cationically polymerizable epoxy resin composition of the present invention preferably further comprises an oxetane resin, which promotes the curing of these epoxy resins by the acid generator.

The cationically polymerizable epoxy resin composition of the present invention comprises an oxetane resin in an amount of, for example, 3 to 60 wt.%, and preferably 5 to 50 wt.%, based on the entire cationically polymerizable epoxy resin composition.

Examples of other components further include adhesive adjuvants (e.g., silane), coupling agents (e.g. titanate), rheology adjusting agents (e.g., fumed silica), and the like.

Even if a pigment is not contained, the cationically polymerizable epoxy resin composition of the present invention can be efficiently cured with visible or infrared laser. The cationically polymerizable epoxy resin composition of the present invention may comprise a pigment, if necessary.

The method for curing a cationically polymerizable epoxy resin composition of the present invention is preferably used for camera module assembly. More specifically, in camera module assembly, the curing of cationically polymerizable epoxy resin composition of the present invention is preferably used to bond a lens holder and a substrate to which an imaging element is fixed. In the above, the camera module is not particularly limited, and is, for example, a small camera module used for smartphones etc.

Further, the curing method of cationically polymerizable epoxy resin composition of the present invention is also preferably used for electronic sensor assembly.

### [Examples]

Resin composition of all examples were prepared by mixing the following components: 100 mg of 3,4-epoxycyclohexylmethyl-3',4'-epoxycyclohexane carboxylate (manufactured by Daicel "Celoxide 2021P), 100 mg of bisphenol A type epoxy resin ("EPICLON 840" manufactured by DIC Corporation), 100 mg of 3-ethyl-3{[(3-ethyloxetan-3-yl)methoxy]methyl}oxetane ("OXT 221" manufactured by Toagosei Co., Ltd.), 3 mg of thermal acid generator ("TGA CXC1821" manufactured by King Industries), and 500 mg high-purity synthetic spherical silica (SO-E5, produced by Admatechs, average particle size: 2 µm). Specifically, the above components were blended, kneaded and dispersed using a three-roll mill, and further vacuum-defoamed to obtain a resin composition.

A curing test was performed in the following manner. Table 1 shows the results of evaluation.

### [Curing Test Method]

The curing reaction peak of the epoxy resin composition was measured using a differential scanning calorimeter of DSC6000 from Seiko Instruments Inc. in a nitrogen atmosphere at a temperature range of 25°C to 200°C and a heating rate of 10°C /min. The curing peak temperature was observed at 80°C.

The epoxy resin composition was applied in an amount of 0.01 cc to a glass slide. The resulting glass slides were irradiated with a 980-nm laser at an angle of 90° using a laser diode device CB1F including a radiation thermometer, produced by Panasonic Corporation. The control temperature on the surface of the resin composition, the time to reach the control temperature, the total irradiation time are shown in Table 1, and then the curing methods were evaluated in terms of appearance and curability of the cured product with bamboo sticks by touch.

**[Table 1]**

| | Example 1 | Example 2 | Example 3 | Comparative Example 1 | Comparative Example 2 |
|---|---|---|---|---|---|
| Control temp. | 175°C | 125°C | 225°C | 80°C | 300°C |
| Time to reach control temp. | 3s | 3s | 3s | 3s | 3s |
| Total Irradiation Time | 10s | 15s | 5s | 15s | 5s |
| Appearance | Fine | Fine | Fine | Fine | Burned |
| Curability | Fully cured | Fully cured | Fully cured | Partially cured | Fully cured |

When the cationically polymerizable epoxy resin compositions in Example 1, 2 and 3 were irradiated with a laser to maintain the surface temperature in an appropriate temperature range, they fully cured with good appearance. In contrast, when a lower temperature was applied in Comparative Example 1, the cationic polymerizable epoxy resin composition was only partially cured. Furthermore, when a higher temperature was applied in the Comparative Example 2, decomposition of cured adhesive occurred although the composition sufficiently cured.

## Claims

1. A method for curing a cationically polymerizable epoxy resin composition, the method comprising:
1) irradiating a cationically polymerizable epoxy resin composition with a UV, visible or infrared laser, and
2) maintaining the surface temperature of the cationically polymerizable epoxy resin composition between 25°C higher than the curing reaction peak temperature of the cationically polymerizable epoxy resin composition as measured by differential scanning calorimetry and 275°C,
wherein the cationically polymerizable epoxy resin composition comprises:
(A) an epoxy resin; and
(B) an acid generator.

2. The method for curing a cationically polymerizable epoxy resin composition according to claim 1, wherein the epoxy resin (A) comprises an alicyclic epoxy resin.

3. The method for curing a cationically polymerizable epoxy resin composition according to claim 2, wherein the epoxy resin (A) further comprises a glycidyl ether epoxy resin.

4. The method for curing a cationically polymerizable epoxy resin composition according to any one of claims 1 to 3, wherein the surface temperature of the cationically polymerizable epoxy resin composition is maintained in a temperature between 30°C higher than the curing reaction peak temperature of the cationically polymerizable epoxy resin composition as measured by differential scanning calorimetry and 250°C.

5. The method for curing a cationically polymerizable epoxy resin composition according to any one of Items 1 to 4, wherein the cationically polymerizable epoxy resin composition further comprises (C) an oxetane resin.

6. The method for curing a cationically polymerizable epoxy resin composition according to any one of claims 1 to 5, wherein the cationically polymerizable epoxy resin composition further comprises (D) an inorganic filler.

7. The method for curing a cationically polymerizable epoxy resin composition according to any one of claims 1 to 6, wherein the acid generator (B) is a photoacid generator or a thermal acid generator.

8. The method for curing a cationically polymerizable epoxy resin composition according to any one of claims 1 to 7, wherein the cationically polymerizable epoxy resin composition is curable at a UV, visible or infrared laser having a wavelength of 300 to 1200 nm.

9. The method for curing a cationically polymerizable epoxy resin composition according to any one of claims 1 to 8, wherein the laser irradiation is controlled so that the time from the start of the laser irradiation to reaching the surface temperature of the cationically polymerizable epoxy resin composition is from 0.1 to 30 seconds, and preferably from 1 to 25 seconds.

10. The method for curing a cationically polymerizable epoxy resin composition according to any one of claims 1 to 9, for use in at least one application selected from the group consisting of metal bonding, camera module assembly, and electronic sensor assembly.
